Europäisches Patentamt

European Patent Office

Office européen des brevets

(11) Veröffentlichungsnummer: **0 024 059**
**B1**

(12) **EUROPÄISCHE PATENTSCHRIFT**

(45) Veröffentlichungstag der Patentschrift:
17.02.82

(21) Anmeldenummer: 80200586.8

(22) Anmeldetag: 20.06.80

(51) Int. Cl.³: **B 32 B 27/34, B 65 D 77/20**

54 **Folienförmige Heissiegelschichtkombination und deren Verwendung.**

(30) Priorität: 10.08.79 CH 7384/79

(43) Veröffentlichungstag der Anmeldung:
18.02.81 Patentblatt 81/7

(45) Bekanntmachung des Hinweises auf die Patenterteilung:
17.02.82 Patentblatt 82/7

(84) Benannte Vertragsstaaten:
AT BE FR GB IT NL SE

56 Entgegenhaltungen:
DE-A-1 621 801
DE-A-2 260 581
US-A-3 524 787
US-A-4 105 818

73 Patentinhaber: Schüpbach A.G.,
Kirchbergstrasse 168/170, CH-3400 Burgdorf Kanton
Bern (CH)

72 Erfinder: Hofer, Rudolf, Gyrischachenstrasse 6a/602a,
B-3400 Burgdorf (BE)

74 Vertreter: Bovard, Fritz Albert, Bovard & Cie
Patentanwälte VSP Optingenstrasse 16,
CH-3000 Bern 25 (CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Folienförmige Heißsiegelschichtkombination und deren Verwendung

Die vorliegende Erfindung bezieht sich auf eine Siegelschichtkombination und auf deren Verwendung für die Herstellung oder zum Verschließen von in der Siegelnaht aufreißbaren Form- oder Raumpackungen.

Es ist bekannt, z. B. aus der CH-A-584 633, für Joghurtbecher, Quarkbecher und andere aufreißbare Packungen Deckblätter in Form einer Aluminiumfolie, nachstehend als »Alufolie« bezeichnet, die einseitig mit einem Heißsiegellack auf Basis von PVC, Acryl- oder Methacrylsäureester oder einem Copolymer davon beschichtet sind, einzusetzen. Im allgemeinen liegt die Dicke solcher Alufolien im Bereich von 0,03 – 0,06 mm und das Beschichtungsgewicht mit dem Heißsiegellack im Bereich von 4 – 12 g/m².

Als Bechermaterial für derartige Packungen gelangt vorwiegend Polystyrol oder ein Copolymer davon zum Einsatz.

Ein Nachteil solcher Deckblätter besteht darin, daß die Alufolie beim Aufreißen einreißt und ein ideales Öffnen der Packung somit nicht möglich ist. Ein weiterer Nachteil ist die Gefahr von Schnittverletzungen an Zunge und Finger, insbesondere bei Kindern. In letzter Zeit wird auch der Verbrauch von Aluminium als Nachteil erachtet.

Es ist Aufgabe der vorliegenden Erfindung, ein Versiegelungssystem zu schaffen, das diese Nachteile nicht aufweist, eine wesentliche Verbesserung des Aufreißkomfortes bietet und außerdem ermöglicht, auf die Verwendung von Aluminium teilweise oder vollständig zu verzichten.

Diese Aufgaben werden durch die im Patentanspruch 1 definierte Siegelschichtkombination gelöst.

Mittels der erfindungsgemäßen Siegelschichtkombination allein oder in Kombination mit einem Trägermaterial können handelsübliche Formpackungen aus PS oder PVC durch Heißsiegelung verschlossen und leicht wieder geöffnet werden.

In einer Ausführungsform ist die Folie aus PA 6 oder 6,6 auf ihrer freien, der Heißsiegellackierung abgewendeten Oberfläche mit einer Deckfolie aus Aluminium oder Papier kaschiert und/oder mit einer Außenlackierung versehen. Für eine derartige, als Trägermaterial dienende Kaschierung gelangen vorzugsweise Aluminiumfolien einer Dicke im Bereich von 0,009 – 0,030 mm oder Papier mit einem Flächengewicht von 60 g/m² zum Einsatz. Eine allfällige Außenlackierung kann in Form eines Reklameaufdrucks und/oder als Schutzschicht einer Papierkaschierung gegen Witterungseinflüsse vorliegen.

Die hier verwendete Bezeichung »Siegelschichtkombination« soll zum Ausdruck bringen, daß die in vielen Versuchen ermittelte Kombination von PA 6 oder 6,6 / PVDC / Gemisch von mindestens einem Polymethacryl-Copolymer und mindestens einem Polyvinyl-Copolymer als Gesamtheit zu einer optimalen Versiegelung und Aufreißbarkeit einer schlossenen Packung führt. Die beschriebene Reihenfolge der drei Schichten, nämlich PA 6 oder 6,6 als eigentliche Verschlußfolie, PVDC als Haftschicht und dem beschriebenen Heißsiegellack, der nachstehend auch als »Thermolack« bezeichnet wird, ist in der erfindungsgemäßen Siegelschichtkombination unerläßlich. Es wird angenommen, daß alle drei Schichten untereinander und mit dem Bechermaterial bei der Heißsiegelung eine Reaktion, nämlich eine sogenannte Verschmelzung, eingehen. Der genaue Mechanismus dieses Vorgangs ist jedoch noch nicht restlos abgeklärt.

Neben dem bereits erwähnten Vorteil, daß die beschriebene Siegelschichtkombination allein oder in Kombination mit einem Trägermaterial als Verschlußmaterial zum Einsatz gelangen kann, weist die Siegelschichtkombination die weiteren Vorteile auf, daß sie in einem weiten Temperaturbereich heißgesiegelt werden kann und daß die Schnittverletzungsgefahr ausgeschaltet ist.

Die Herstellung der Siegelschichtkombination kann auf bekannte Art unter Einsatz der üblichen Lackier- und Kaschiermaschinen erfolgen. Mit PVDC mit oder ohne Haftlack beschichtetes PA 6 oder 6,6 ist in verstreckter und unverstreckter Form im Handel, jedoch für andere Verwendungszwecke, erhältlich. Falls die Herstellung von Grund auf erfolgt, ist es zweckmäßig und empfehlenswert, die Beschichtung der Folie aus PA 6 oder 6,6 mit dem als Haftschicht wirkenden PVDC im Zuge der Folienherstellung vorzunehmen. Die Lackierung mit dem Thermolack kann dann zu einem späteren Zeitpunkt erfolgen, wobei der Thermolack auch partiell, d. h. nur in den heißzusiegelnden Zonen, aufgetragen werden kann.

Das als Heißsiegel- bzw. Thermolack zum Einsatz gelangende, an und für sich bekannte Gemisch kann eines oder mehrere Copolymere von Methacrylat und Vinyl enthalten.

Nachstehend sind beispielsweise Ausführungsformen der erfindungsgemäßen Siegelschichtkombination angeführt, wobei für die Polyamidfolie sowohl PA 6 wie auch PA 6,6 verwendet werden kann, wovon jedoch PA 6 bevorzugt wird.

### Beispiele

a) Außenlackierung / Alufolie 15 μm / PA 20 μm / PVDC 4 g/m² / Thermolack 4 g/m²

b) Außenlackierung / Papier 60 g/m² / PA 20 μm / PVDC 4 g/m² / Thermolack 4 g/m²

c) Außenlackierung / PA 40 μm / PVDC 4 g/m² / Thermolack 4 g/m²

d) Außenlackierung / Zellglas / PA 20 μm /
PVDC 4 g/m² / Thermolack 4 g/m²

**Patentansprüche**

1. Siegelschichtkombination in Form einer Folie aus Polyamid 6 oder 6,6, die ein- oder beidseitig mit einer Haftschicht aus Polyvinylidenchlorid beschichtet ist, wobei die Haftschicht ganz oder teilweise mit einem Heißsiegellack aus einem Gemisch von mindestens einem Polymethacrylat-Copolymer und mindestens einem Polyvinyl-Copolymer versehen ist.

2. Siegelschichtkombination nach Anspruch 1, dadurch gekennzeichnet, daß die Folie aus Polyamid 6 oder 6,6 auf ihrer freien, der Heißsiegellackierung abgewendeten Oberfläche mit einer Deckfolie aus Aluminium oder Papier kaschiert und/oder mit einer Außenlackierung versehen ist.

3. Verwendung einer Siegelschichtkombination nach Anspruch 1 für die Herstellung oder zum Verschließen von in der Siegelnaht aufreißbaren Form- oder Raumpackungen.

**Claims**

1. Sealing-layer combination in the form of a film of polyamide 6 or 6.6 coated on one or both sides with an adhesive layer of polyvinylidene chloride, the adhesive layer being provided wholly or in part with a thermosealing layer made of a mixture of at least one polymethacrylate copolymer and at least one polyvinyl copolymer.

2. Sealing-layer combination according to claim 1, characterized in that the film of polyamide 6 or 6.6 is backed on its free surface remote from the thermosealing layer with a cover sheet of aluminium or paper and/or is provided with an outer coat of lacquer.

3. Use of a sealing-layer combination according to claim 1 for producing or for sealing packaging containers to be torn open along the sealing seam.

**Revendications**

1. Stratifié soudable sous la forme d'une feuille en polyamide 6 ou 6,6 muni sur une face ou sur les deux faces d'un revêtement formé par une couche adhésive de chlorure de polyvinylidène, la couche adhésive étant munie en totalité ou en partie d'une laque thermosoudable formée par un mélange d'au moins un copolymère de polyméthacrylate et d'au moins un copolymère de polyvinyle.

2. Stratifié soudable suivant la revendication 1, caractérisé en ce que la feuille de polyamide 6 ou 6,6 est revêtue sur sa surface libre orientée à l'opposé de la laque thermo-soudable d'une feuille de recouvrement en aluminium ou en papier et (ou) est munie d'un vernis extérieur.

3. Utilisation d'un stratifié soudable suivant la revendication 1 pour la fabrication ou la fermeture d'emballages mis en forme ou constituant un réceptacle pouvant être ouverts par arrachement suivant le joint soudé.